# EUROPEAN PATENT APPLICATION

(11) **EP 2 664 984 A2**
(43) Date of publication of application: **20.11.2013**
(21) Application number: 13164612.7
(22) Date of filing: 19.04.2013
(51) Int. Cl.: G06F 3/0488

(54) **Keyboard device**

(30) Priority: 17.05.2012 US 201261648398 P; 12.10.2012 US 201261719311 P
(71) Applicant: Todora, Dennis Patrick, Woodbury, MN 55129 (US); Todora, Grace Marie, Woodbury, MN 55129 (US)
(72) Inventor: Todora, Dennis Patrick, Woodbury, MN 55129 (US); Todora, Grace Marie, Woodbury, MN 55129 (US)
(74) Representative: Boden, Keith McMurray

(57) **Abstract**

A physical keyboard membrane with "feel and tap" technology projects each individual or specified key above the flat input surface or display of a virtual touch screen keyboard for mobile telephone, smart phone and tablet devices.

## Description

### CROSS-REFERENCE TO RELATED APPLICATIONS

This application claims the benefit of U.S. Provisional Application Serial No. 61/648,398, titled KEYBOARD DEVICE, filed May 17, 2012, and of U.S. Provisional Application Serial No. 61/719,311, titled KEYBOARD APPARATUS, filed October 12, 2012.

### BACKGROUND OF THE INVENTION

Mobile telephone and tablet devices that rely solely on virtual touch screen keyboard technology restrict a user's ability related to keyboard touch memorization and efficient use of the device, particularly, for mobile applications requiring the use of a keyboard for input, i.e. text messaging, email creation or other applications requiring the use of a virtual keyboard. Each time a user is required to key or type characters, numbers or symbols using the virtual keyboard it is a new experience and requires a re-orientation and visual view of the screen or keyboard for the user to accomplish data entry keystrokes. The present invention provides a device to facilitate data entry into various electronic devices having touch screen keyboards.

### BRIEF SUMMARY OF THE INVENTION

The present invention relates to a device comprised of a physical keyboard membrane with "feel and tap" technology that projects each individual or specified key above the flat input surface or display of a virtual touch screen keyboard for mobile telephone, smart phone and tablet devices. The device of the present disclosure provides the user with an alternative navigation, feel and potential muscle memory development for key proximity and virtual keyboard layout with physical touch feedback.

An embodiment of the device of the present disclosure may include a clear pliable material which is molded into a physical keyboard membrane design that will provide protection and economic and ergonomic benefits to users of virtual touch screen keyboard designs for mobile telephone, smart phone and tablet devices. The device of the present disclosure may include a physical keyboard membrane design which may be customizable to work with various virtual touch screen keyboards designed for mobile telephone, smart phone and tablet devices to enhance the user's virtual touch screen keyboard experience. The keyboard membrane of the device of the present disclosure creates a raised physical keyboard with keys mapped to existing virtual touch keyboard devices to utilize "feel and tap" technology. The device of the present disclosure may be adapted to work with existing virtual touch screen keyboards for mobile telephone, smart phone and tablet devices.

The device of the present disclosure may include keyboard membrane designs which will provide users a variety of favorite predefined custom virtual keyboard layouts for mobile telephone, smart phone and tablet devices. The device of the present disclosure may include software with custom virtual keyboard layout designs for installation on many mobile telephone, smart phone and tablet devices. The custom software will allow users to choose from various different custom virtual keyboard layouts for their specific devices to maximize the utility and experience of using the physical keyboard membrane with "feel and tap" technology.

The virtual keyboard modification software application coupled with the predefined custom keyboard membranes will allow users to replace their standard virtual keyboard on their existing device for maximum user keyboard utility and experience with "feel and tap" technology. The "feel and tap" keyboard membrane technology in addition to the customizable virtual keyboard options will provide persons with sight limitation the opportunity to use virtual touch screen keyboards for mobile telephone, smart phone and tablet devices.

The physical keyboard membrane of the device of the present disclosure may be customized and cut for exact fit to allow easy end-user installation on touch and flat screen devices. The physical keyboard membrane of the device of the present disclosure easily and securely attaches to touch and flat screen devices and may be removed without leaving a sticky residue.

### BRIEF DESCRIPTION OF THE DRAWINGS

FIG. 1 is a front view of one embodiment of the keyboard device.

FIG. 2 is a front view of two examples of the top portion of the keyboard device of FIG. 1.

FIG. 3 is a front view of one embodiment of the keyboard device.

FIG. 4 is a front view of one embodiment of the keyboard device.

FIG. 5 is a side view of one embodiment of the keyboard device.

FIG. 6 is a three-dimensional view of one embodiment of the keyboard device.

FIG. 7 is a front view of an example smart phone with keyboard.

FIG. 8 is a front view of one embodiment of the keyboard device in use with an example smart phone.

FIG. 9 is an exploded side view of one embodiment of the keyboard device.

FIG. 10 is a process diagram illustrating the hydro-forming process use to manufacture some embodiments of the keyboard device.

FIG. 11 is an illustration showing the process to remove the adhesive backing attached to the device in some embodiments.

FIG. 12 is a diagram of one embodiment of the keyboard device wherein the device has embedded printed flexible circuits.

### DETAILED DESCRIPTION

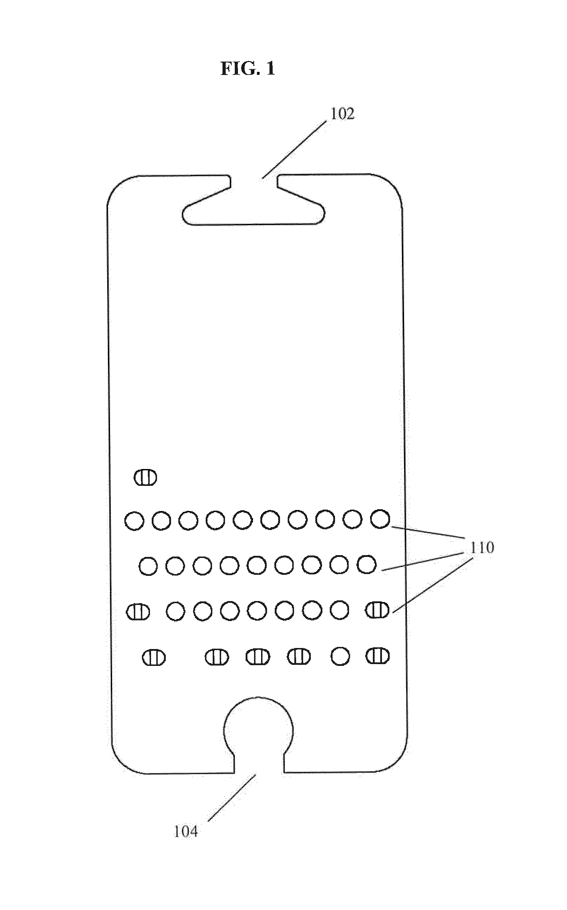

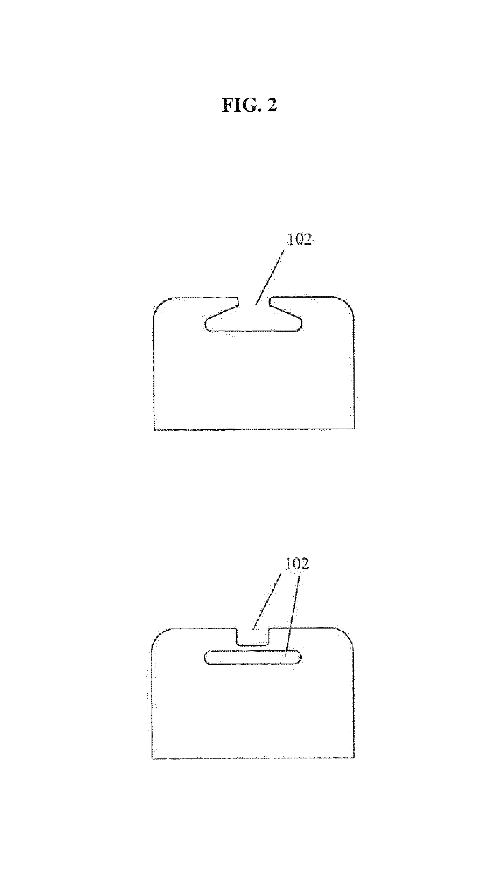

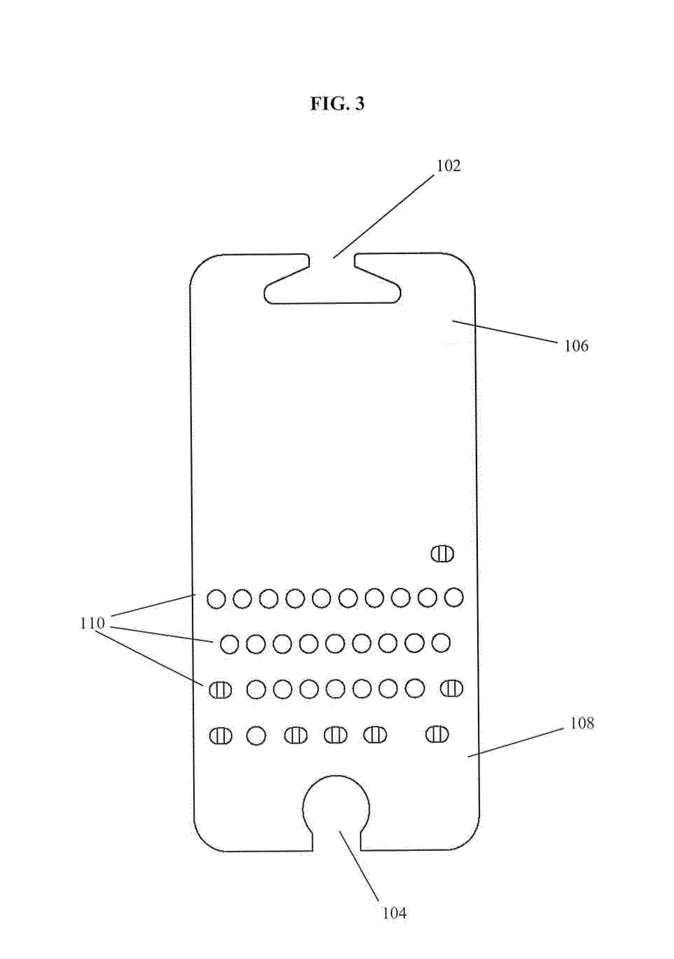

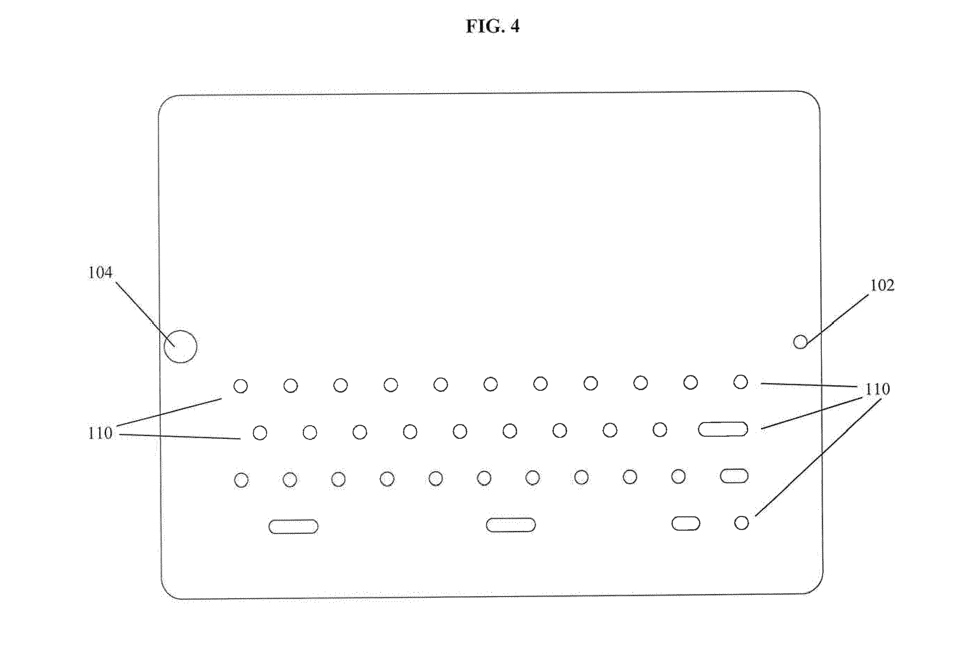

Referring to FIG. 1 through FIG. 4, the keyboard device may be configured in a number of shapes and sizes to fit a variety of electronic devices. FIG. 1 is an illustration of one embodiment of the keyboard device, wherein the device has a cutout 102 at the top of the device, configured so as to line up with the speaker and front camera of a smart phone (for example, an iPhone). The top cutout can be in any shape that prevents the device from interfering with components located on or near the screen of a smart phone or other electronic device. FIG. 2 illustrates a further example of the possible shape and location of the top cutout(s). As shown in FIG. 2, the top cutout 102 may be in the shape of a coat hanger, or may be in other shapes. The top cutout 102 may be a single cutout or may be several cutouts, as illustrated in FIG. 2. The device may further include a circular or other shaped second cutout 104 at the bottom of the device so as not to interfere with other buttons on the face of a smart phone. As illustrated in FIG. 3, the device may be printed with a color bar 106 at the top of the device. The color bar 106 may be merely decorative, or it may be printed in a location that assists a user with the proper placement of the device on a smart phone screen, for example, the bottom of the color bar may line up with the top of the smart phone screen. The device may further include a guide line 108 printed across the bottom portion of the device to facilitate a user with placement of the device on a screen (for example, the guide line may line up with the bottom edge of the screen on a smart phone). In some embodiments, the device is configured in a shape and size to be used with a tablet (for example, an iPad), as illustrated in FIG. 4.

As illustrated in FIG. 1 through FIG. 4, the device includes a keyboard membrane designed in such a way that the layout of the individual touch points 110 corresponds to the layout of the keys of a virtual keyboard for mobile telephone, smart phone and tablet devices.

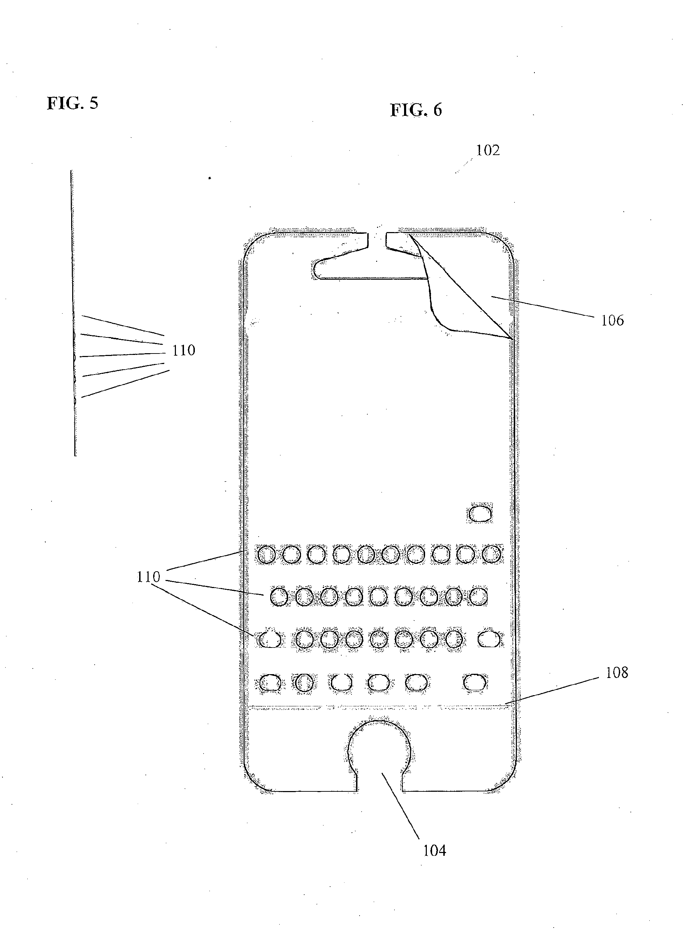

A clear, flat, micro-thin, pliable material is used to create custom molded elastic individualized touch-points 110 rising above the flat screen surfaces of virtual keyboard layouts for mobile telephone, smart phone and tablet devices, as illustrated in FIG. 5. In some embodiments, the material used is a PVC-free cling film, or a polyester, polyethylene film. The foregoing are examples only, and other plastic or thin materials may be used. In some embodiments, the material may be approximately 2 millimeters thick. The material may be laminated to a matte clear liner. The material may have an application temperature in the range of 60 to 85 degrees Fahrenheit, or may have other application temperature ranges. The material may be able to withstand temperatures of a wide range, for example, -40F to +225F, or -40F to +300F. The material may be recyclable in some embodiments.

In some embodiments, each individualized touch-point 110 has elastic memory properties designed to collapse when depressed, producing an input function on the device for a desired result, and automatically return back to its original shape when released for repeated use and feedback to the user. Alternatively, the touch-points may be rigid and retain their original shape when depressed. The touch-points 110 of the device are further illustrated in the three-dimensional view of FIG. 6.

The elastic individual touch-points 110 can have varying degrees of pressure sensitivity which is based on wall thicknesses. The spacing between each touch-point will also vary to match specific virtual keyboard layouts with correlating touch-points for specific input points of virtual keyboard layouts for mobile telephone, smart phone and tablet devices.

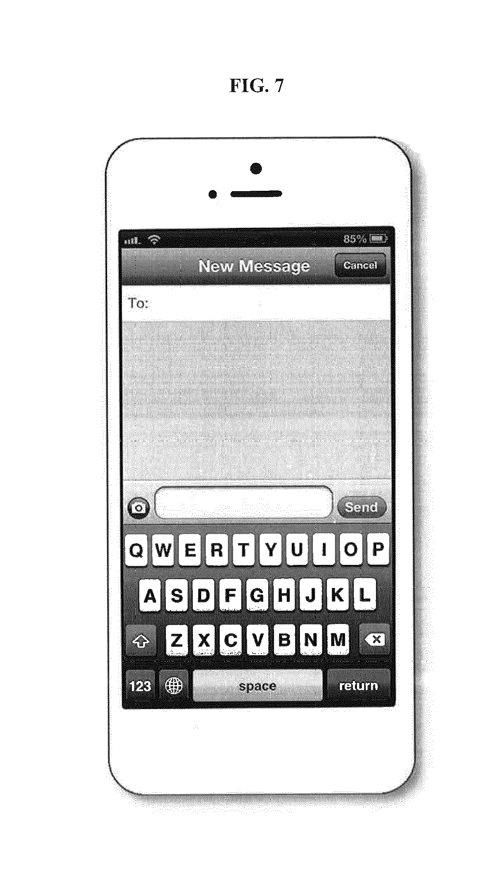

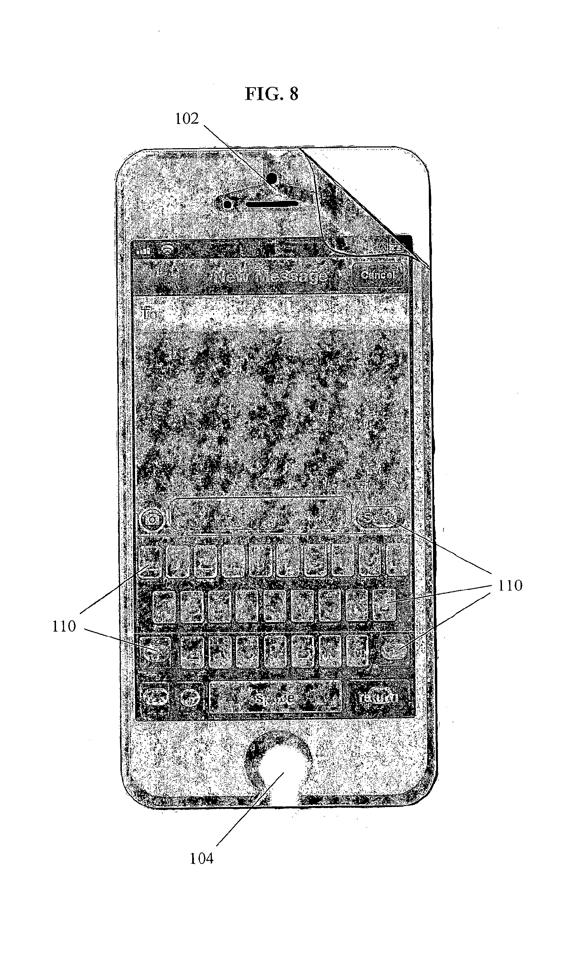

FIG. 7 illustrates an example smart phone and its keyboard that may be used along with the keyboard device. As shown in FIG. 8, the clear, flat, micro-thin, pliable material attaches to all smooth flat screen mobile telephone, smart phone and tablet devices using static cling or removable adhesive backing. The clear, flat, micro-thin, pliable material may also attach to an electronic device with a curved screen.

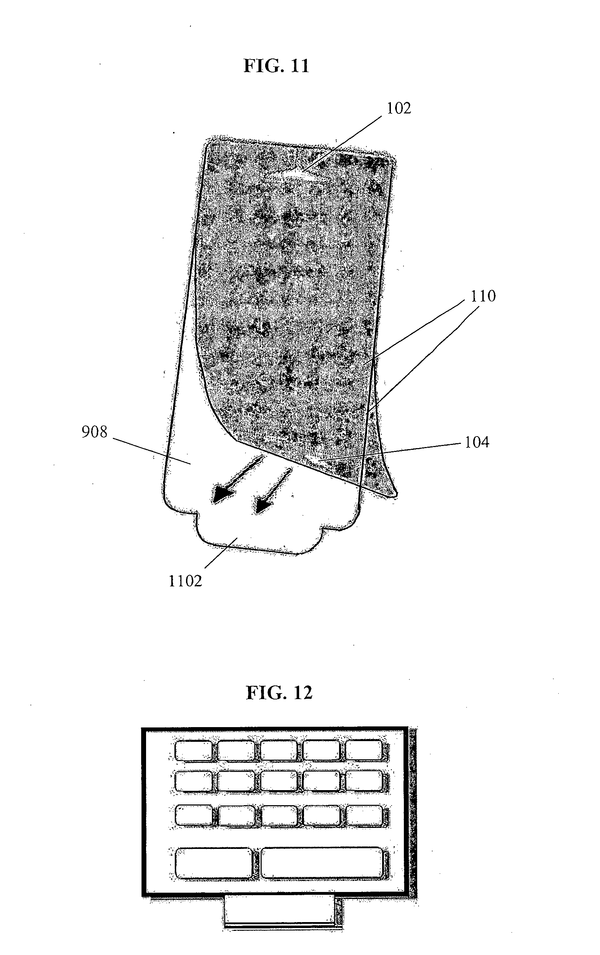

The diagram in FIG. 12 illustrates a keyboard design using embedded printed flexible circuit technology. There are several size, design, thickness, weight and configuration advantages using this technology as an alternative to producing non-electrical flexible input devices as mentioned above and shown in the various drawings. Flexible printed circuit technology can be manufactured to externally integrate or attach to mobile telephone, smart phone and tablet devices. Each specific input point (touch-point), when depressed, will produce an electrical impulse sending a signal to the system for an appropriate response.

As shown in FIG. 8, the clear flat micro thin pliable material attaches to a smooth flat screen mobile telephone, smart phone and tablet device using static cling or removable adhesive backing. The clear, flat, micro-thin, pliable material may also attach to an electronic device with a curved screen. Various embodiments of the device will allow for configuration of the pattern and spacing of each touch-point 110 and overall keyboard size to match specific primary key functions of a virtual keyboard layout for mobile telephone, smart phone and tablet devices.

The keyboard device may include touch-points for primary keys, specialty function keys and auxiliary keys. Additional key designs will be introduced and documented for compatibility use with virtual keyboards of a variety mobile telephone, smart phone and tablet devices. In some embodiments, the device does not include touch-points but rather is a flat surface to be used as a screen protector for a smart phone, tablet or other electronic device.

The overall configuration of each touch-point 110 and touch-point pattern may cover up to or less than 100% of the total flat or curved surface area of a touch screen device. Touch-points are positioned to overlay and match specific character or function keys of a virtual keyboard layout. Each touch-point diameter may be equal to or greater than the overall character size of a key it is positioned above, and each touch-point overall size does not exceed the overall perimeter size and shape of the same primary key for all keyboard layouts for mobile telephone, smart phone and tablet devices. The entire flat surface area of the pliable material is attached to the mobile telephone, smart phone or tablet device using static cling or removable adhesive backing. Each individualized touch-point 110 rises above the flat or curved screen surface of a virtual keyboard layout void of any physical material in the cavity. When an individual touch-point is pressed, an input function is produced for a desired result (the key is selected); when the touch-point is released it returns to its original shape. Alternatively, the touch-points 110 may be rigid and retain their original shape when depressed.

Referring again to FIG. 1 through FIG. 4, the device may be cut in a variety of shapes and sizes to accommodate various screen sizes and shapes. The device overall perimeter shape is cut to be less than the overall perimeter size of a mobile telephone, smart phone or tablet device, and will cover up to 100% of the viewable flat area surface of the mobile telephone, smart phone and tablet device for which it is configured. Specific cut outs or removal of pliable material within the device perimeter are designed to accommodate different form factors of mobile telephone, smart phone and tablet devices, such as the clothes-hanger shaped cutout in FIG. 1. Touch-point distortion of the smooth or flat surface of the pliable micro-thin material represents an overall area of less than 50%.

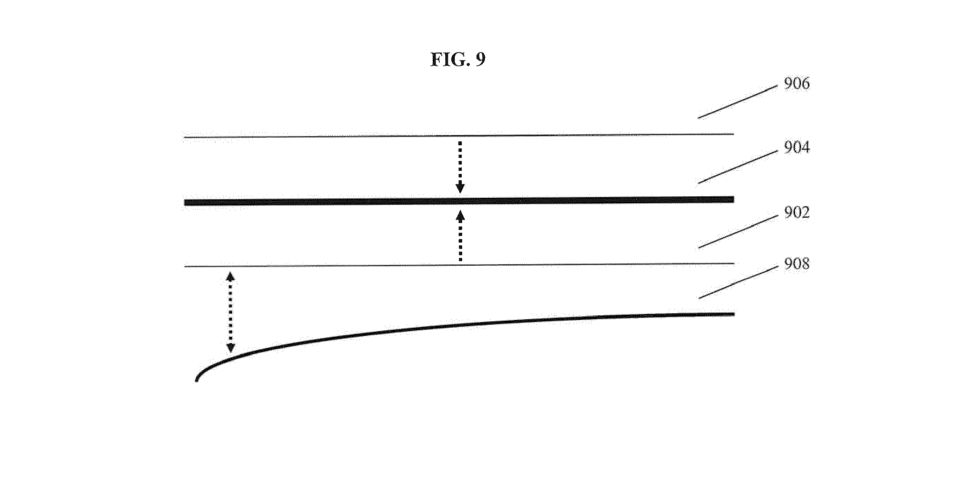

The device may be comprised of multiple layers, as illustrated in FIG. 9. In this example, the device is comprised of a layer of adhesive 902, a layer of micro-thin pliable material 904, and a layer of hard coating 906. The adhesive 902 and hard coating 906 are permanently affixed to the micro-thin pliable material 904. In some embodiments, such as that illustrated in FIG. 9, the device further includes a layer of protective backing material 908. The backing material 908 is peeled away from the device in order to expose the adhesive 902. In some embodiments, the adhesive layer may be a hybrid of acrylic and urethane. The adhesive layer may be made of other materials as known in the art. In some embodiments, the hard coating layer may be achieved by placing a layer of coating over the micro-thin pliable material or film in order to make the film more abrasion resistant, scratch resistant, and chemical resistant. The micro-thin pliable material may be on the high or very high end of the clarity scale to allow a user to see their screen clearly through the device. For example, the total light transmission may be 88.8% clarity or higher in some embodiments. In some embodiments, the device is comprised of a PVC-free, non-adhesive film that clings to a surface like static cling vinyl, but is easier to apply to a surface due to the rigidity of the film, and does not require the use of an adhesive layer.

In some embodiments, the clear flat micro-thin pliable material 904 is attached to a micro thin backing material 908. The backing material may be clear, matte, or opaque, and may be a tight release liner based on the tack level of the adhesive used. In the example shown in FIG. 11, the backing material includes a double-layered tab 1102 configured to facilitate removal of the backing 908. As illustrated in FIG. 11, before the backing is removed from the device, the tab is removably attached to the keyboard device and permanently attached to the backing 908. To remove the backing using the tab, a user bends back the tab 1102, releasing the tab from the device, and peeling away the backing 908 using the tab 1102. In the example shown in FIG. 11, a cutout 104 is left in the device in the shape and location of a smart phone button. Once the backing material 908 is removed from the device, the device can be attached to a smooth flat screen mobile telephone, smart phone or tablet device using static cling or removable adhesive backing. The device may also be attached to a smooth curved screen electronic device. The pattern and spacing between each touch-point 110 and overall keyboard size configuration will vary to match the specific primary key functions of a virtual keyboard layout for the mobile telephone, smart phone and tablet device. Touch-points 110 raise above the surface of a touch device, for example, 1.5 to 3 times the thickness of the clear micro-thin pliable material. The touch-points may raise above the surface in other ratios of thickness compared to the clear micro-thin pliable material.

Different embodiments and configurations of the device, such as the clear flat micro-thin pliable material configured with static cling or removable adhesive backing, may require different manufacturing methods to produce the device. Below are examples of the forming processes that could be used to create the device.

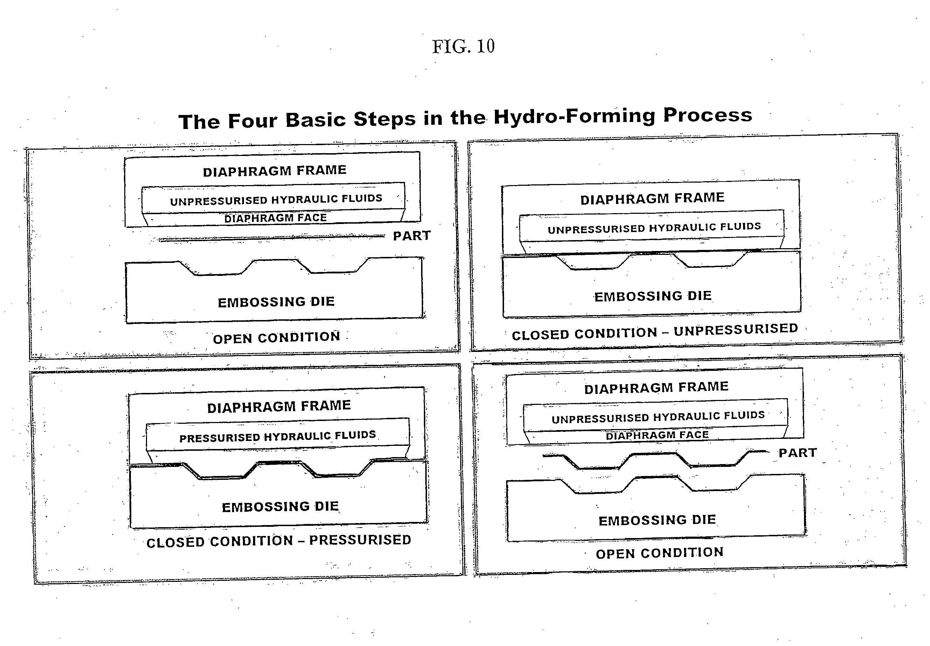

Hydro-form embossing is a process that uses a hydraulic fluid cell assembly with a diaphragm type face. An example of the hydro-form embossing process is illustrated in FIG. 10. The hydraulic fluid cell acts as the active compressive "counter die" to replace part of the die-set used in traditional embossing processes, allowing materials to be pin registered to the exact image transfer on the die plate. The diaphragm applies pressure equalized hydrostatically to minimize distortion of the end product. The diaphragm further has an elastomer face to assist in prevention of mis-strikes. Advantages of using the hydro-form embossing process include minimum distortion to the material, more accurate embossing registration, no heat is applied to the material, less destruction to the material, and the ability to achieve more complicated embossing shapes, compared to other methods of embossing.

As illustrated in FIG. 10, there are four basic steps to the hydro-form embossing process. First, the top portion of the hydro form machine, comprised of a diaphragm frame, hydraulic fluids, and diaphragm face, starts in an open position above the embossing die. While in an open position, the hydraulic fluids are unpressurized. The part to be embossed is placed between the top portion of the machine and the embossing die. Second, the top portion of the machine is placed in a closed position, with the hydraulic fluids remaining unpressurized. Third, the hydraulic fluids are pressurized, causing the diaphragm face to force the part into the form of the embossing die. Fourth, the top portion of the machine is raised back to an open position and the hydraulic fluids are unpressurized, allowing an operator to remove the embossed part.

Vacuum forming is a process in which sheet plastic is heated and formed over a mold by removing air from the area between the mold surface and the sheet. Molds can be created from aluminum, wood, or epoxy. The plastic mold type is only dependent on the finished vacuum forming product design requirements.

Due to the manufacturing process, the touch-points of the device have a different diameter from the back of the device compared to the front of the device in the size of the thickness of the material used for the device.

As illustrated in FIG. 3, some embodiments of the device may include a color bar 106 or other printing on the device. Artwork and film positives are created using computer software. Printing screens are then stretched, coated, exposed, developed and blocked out. The ink is then prepared, and a visual color check is performed. Material is cut from rolls into sheets. Screens are then set up on a printing press, and each color is printed individually. The die is inspected using a coordinate measuring machine, and parts are die cut to size with steel rule dies in a clamshell die cutting press. In some embodiments, a digital or UV printing process can be used to print custom logos and designs on the device. The material used for the device may be compatible with different types of printing, for example, screen printing, UV curable digital printing, latex digital printing, litho printing, water-based printing and UV flexography.

The various embodiments described above are provided by way of illustration only and should not be construed to limit the claims attached hereto. Those skilled in the art will readily recognize various modifications and changes that may be made without following the example embodiments and applications illustrated and described herein and without departing from the true spirit and scope of the following claims.

## Claims

1. A physical keyboard comprising a membrane having a plurality of touch-points configured to project individual electronic keyboard keys above an input surface.

2. The physical keyboard of claim 1, wherein the touch-points have elastic properties allowing the touch points to collapse when depressed, and automatically return back to the original shape when released.

3. The physical keyboard of claim 1 or 2, wherein the touch-points are rigid and retain their shape when depressed.

4. The physical keyboard of any of claims 1 to 3, further comprising embedded printed flexible circuits.

5. The physical keyboard of any of claims 1 to 4, wherein the membrane comprises multiple layers.

6. The physical keyboard of claim 5, wherein the multiple layers of the membrane include a layer of adhesive, a layer of micro-thin pliable material, a layer of hard coating, and a protective backing material.

7. The physical keyboard of claim 6, wherein the layer of adhesive is a hybrid of acrylic and urethane.

8. The physical keyboard of claim 6 or 7, wherein the micro-thin pliable material is polyester, polyethylene film.

9. The physical keyboard of any of claims 6 to 8, wherein the hard coating is achieved by placing a layer of coating over the micro-thin pliable material to facilitate abrasion resistance, scratch resistance, and chemical resistance.

10. The physical keyboard of any of claims 6 to 9, further comprising a double-layered tab configured to facilitate removal of the backing.

11. The physical keyboard of any of claims 1 to 10, further comprising a triangular shaped cutout at one edge.

12. The physical keyboard of any of claims 1 to 11, further comprising a circular shaped cutout located at one edge.

13. The physical keyboard of any of claims 1 to 12, configured for use with a flat screen smart phone.

14. The physical keyboard of any of claims 1 to 12, configured for use with a flat screen tablet device.

15. The physical keyboard of any of claims 1 to 14, further comprising a demarcation across a section of the device, configured to align with an edge of a screen of an electronic device.
